Europäisches Patentamt

European Patent Office

Office européen des brevets

(11) Publication number: **0 120 545**
**B1**

(12) **EUROPEAN PATENT SPECIFICATION**

(45) Date of publication of patent specification: **10.10.90**

(21) Application number: **84200429.3**

(22) Date of filing: **27.03.84**

(51) Int. Cl.⁵: **A 01 F 15/00**

(54) Agricultural balers.

(30) Priority: **29.03.83 GB 8308563**
**11.02.84 GB 8403642**

(43) Date of publication of application:
**03.10.84 Bulletin 84/40**

(45) Publication of the grant of the patent:
**10.10.90 Bulletin 90/41**

(84) Designated Contracting States:
**DE FR GB**

(56) References cited:
**EP-A-0 035 114**
**GB-A-2 090 560**
**GB-A-2 128 542**
**US-A-4 345 421**

(73) Proprietor: **FORD NEW HOLLAND N.V.**
**Leon Claeysstraat 3a**
**B-8210 Zedelgem (BE)**

(72) Inventor: **Decoene, Frans J.G.C.**
**Ruddervoordestraat 19**
**B-8210 Zedelgem (BE)**
Inventor: **De Busscher, Cyriel R.J.**
**Stationsstraat 183**
**B-8340 Damme (Sijsele) (BE)**

(74) Representative: **Vandenbroucke, Alberic T.J.**
**et al**
**Ford New Holland NV. Patent Department Leon**
**Claeysstraat, 3A**
**B-8210 Zedelgem (BE)**

Courier Press, Leamington Spa, England.

## Description

This invention relates to agricultural balers and more particularly to so-called round balers which produce cylindrical bales or rolls of crop material.

In general, round balers are of two types: the expanding chamber type such as disclosed in e.g. EP-A-35.114, US-A-4.258.619 and GB-A-2.090.560 and which produces bales with a relatively hard core and a generally high and relatively constant density throughout; and the fixed chamber type such as disclosed in e.g. GB-A-2.128.542 and which produces bales with a relatively soft core but a relatively compacted or hard outer layer or shell.

An advantage of hard core balers is that they pack more crop material into a bale than similarly sized soft core balers. They also can produce bales of any size up to a maximum which a given machine is capable of producing, with all sizes of bales being in generally good order from the standpoint of being subjected to handling without falling apart.

An advantage of soft core balers is that they produce bales with a reduced tendency to moulding if the crop material is baled wet. Yet, soft core bales have good weathering characteristics due to the hard shell which further also is responsible for the soft core bales being good looking, "clean" and very stable when being handled. Furthermore, the core of soft core bales presents no problems to cattle when feeding from these bales (whereas hard cores can be difficult to tear apart).

Also, soft core balers are of a relatively simple design and normally have no difficulty in forming a bale core (which sometimes can be a problem with hard core balers when handling short lengths of crop material).

Hard core round balers (also known as variable chamber round balers) are known which employ a single endless flexible means which is arranged in a tortuous path so as to define a generally vertically oriented, initial or bale starting chamber which, as a bale is being formed therein, expands to a final size bale chamber of generally cylindrical shape. Such an arrangement is disclosed in US-A-4.258.619 and suffers from the disadvantage that it has a relatively complicated mechanical construction. This is because some form of guide means for the flexible means has to be provided with the result that these guide means have to be protected from contact with the bale as otherwise they would interfere with the formation thereof. In US-A-4.258.619, the shielding of these guide means is effected by providing pinch rollers on the opposite sides of the flexible means and which cooperate to close the latter over the bale chamber.

EP-A-35.114 also discloses a variable chamber round baler having a bale starting chamber of which, similarly as in the round baler according to US-A-4.258.619, the shape is generally triangular and oriented generally vertically. However, according to EP-A-35.114, this bale chamber is delimited by a floor conveyor in combination with two sets of expandable bale-forming conveyors of substantially the same dimensions and each having its own tensioning mechanism. This type of round baler is again rather complicated in its construction.

It is an objective of the present invention to produce a round baler which affords some of the advantages of both hard core and soft core balers. Specifically, it is an objective of the invention to provide a round baler which is efficient and versatile in use on the one hand and yet is simple in design and therefore relatively inexpensive to manufacture on the other hand.

Starting from EP-A-35.114, the present invention provides a round baler for forming cylindrical bales of crop material which comprises:

a fixed, main frame portion;

a rear, tailgate portion pivotally mounted on the main frame portion;

first, driven bale-forming means supported on the tailgate portion and complementary, driven bale-forming means supported on the main frame portion; said first bale-forming means being separate from the complementary bale-forming means and comprising endless flexible conveyor means having an expandable operative run extending between upper and lower guide means and facing said complementary bale-forming means in front thereof to delimit together therewith an expandable bale chamber; said operative run, when the bale chamber is empty, extending along a straight, generally upright line between said upper and lower guide means to delimit together with the complementary bale-forming means a generally elongated and generally upright bale starting chamber having its centre positioned forwardly of said straight line, and, during bale formation, being expandable in a direction away from said complementary bale-forming means and outwardly between said guide means to extend along a curved line therebetween to delimit, in part, a generally cylindrically shaped full size bale chamber when a bale being formed therein reaches its maximum size, and said upper and lower guide means being disposed at fixed positions generally at the upper, respectively the lower end of the full size bale chamber, and

separate take-up and tensioning means operatively associated with the endless flexible conveyor means of the first bale-forming means for resiliently urging the operative run thereof towards its straight line position when the bale chamber is empty and permitting said operative run to expand, opposite to resilient forces, towards its curved line position when a bale is being formed in the bale chamber and

which is characterized in that,

when the bale chamber has reached its full size, the operative run of the first bale-forming means defines, in. its entirety, a portion of the circumference of the full size bale chamber which is substantially larger than the portion of the circumference of said full size bale chamber defined by the complementary bale-forming means; the arrangement being such that, during bale formation, the centre of the bale chamber shifts from a position in front of said straight line to a position to the rear thereof.

Preferably, the arrangement is such that the center of the full size bale chamber is positioned within the tailgate portion. Also, the initial shape of the bale starting chamber preferably is generally wedge shaped such as e.g. generally triangularly shaped.

The complementary bale-forming means may comprise non-expandable conveyor means fixedly positioned on the main frame portion. These conveyor means may be in the form of either one or more fixedly positioned rotatably driven rollers or fixedly positioned driven conveyors of the chain or belt type.

Alternatively, the complementary bale-forming means also may comprise endless expandable conveyor means.

Preferably, the complementary bale-forming means are arranged to act less aggressively on the crop material than the first bale-forming means. When the complementary bale-forming means comprise a plurality of rollers, the last roller, as seen in the direction of rotation of a bale in the bale chamber as it is being formed therein in use of the machine, preferably is constructed to act less aggressively on the crop material than any one of the other rollers. Also, each pair of adjacent rollers may be arranged such that the last roller thereof, as seen in said direction, is less aggressive than the other roller of each said pair.

Round balers in accordance with the present invention will now be described in greater detail, by way of example, with reference to the accompanying drawings, in which:

Figure 1 is a schematic side view showing the machine empty,

Figure 2 is a view similar to that of Figure 1 but showing the machine with a completed bale therein,

Figure 3 is an enlarged view of a component of Figure 1,

Figure 4 is a partial sectional view on the line IV—IV of Figure 3,

Figure 5 is an enlarged view of another portion of Figure 1,

Figure 6 is an enlarged view of an alternative component for the baler according to Figure 1,

Figures 7 and 8 are views similar to those of Figures 1 and 2 but showing a second embodiment, and

Figures 9 and 10 are views similar to that of Figure 2 but showing third and fourth embodiments, respectively.

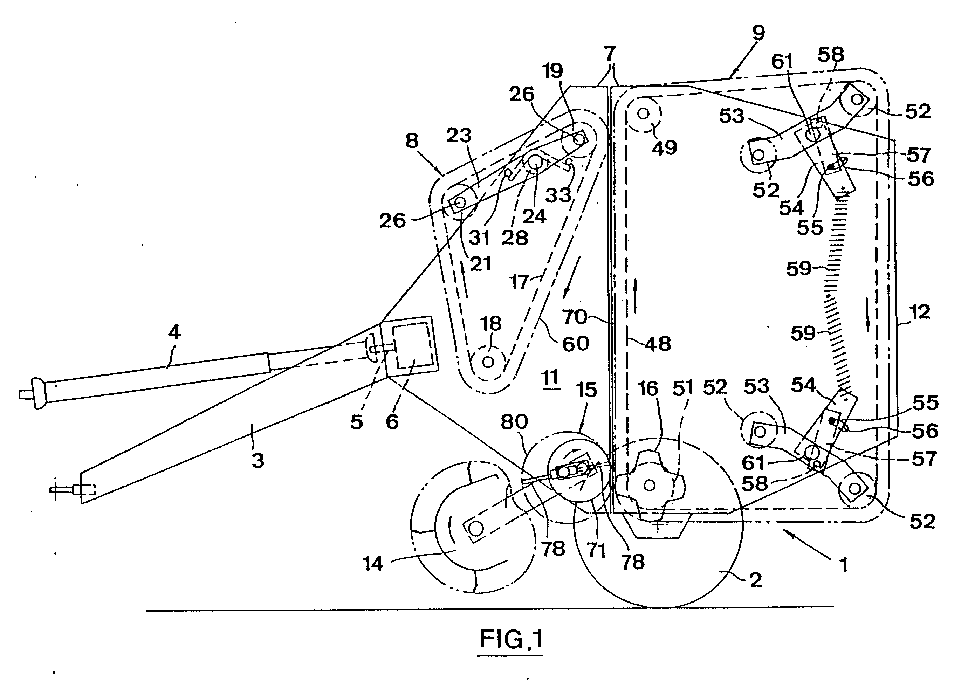

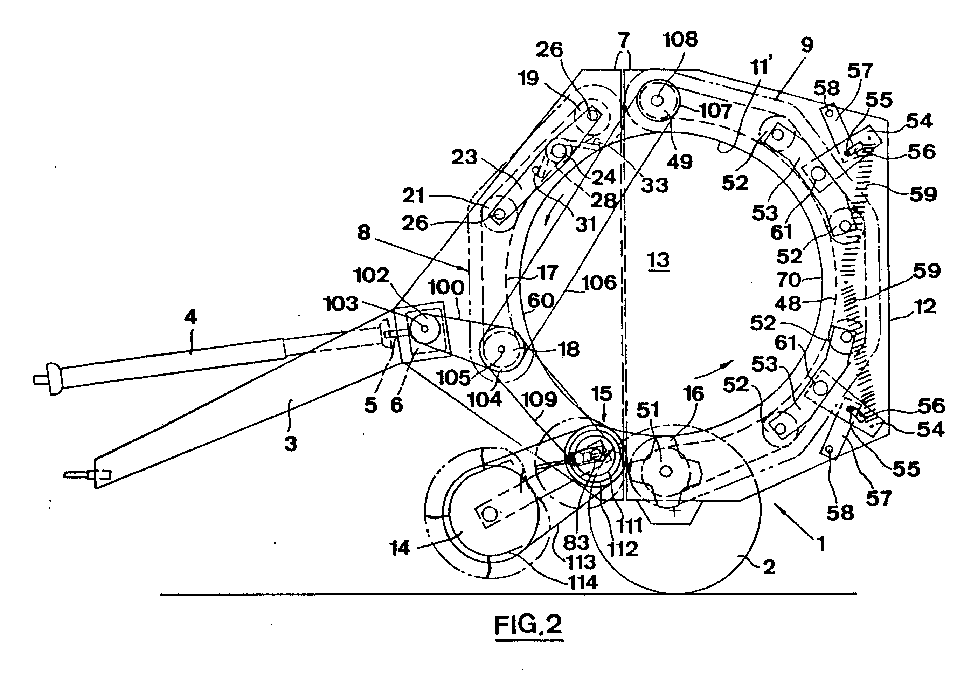

Referring first to Figures 1 and 2, the machine shown therein is in the form of a pull-type round baler comprising a base frame 1 carrying a pair of ground-engaging wheels 2 and having attached thereto a drawbar 3 for connection to a tractor (not shown) or other towing vehicle. A drive shaft 4 extends above the drawbar 3 and is connected at one end to an input shaft 5 of a gearbox 6, and is connectable at the other end to a power-take-off shaft (also not shown) of the towing vehicle. Side walls 7 of the machine are attached to the base frame 1 and partially define a bale forming chamber by way of providing the sides therefor. The front and rear of the bale forming chamber are defined by portions of respective expandable members 8 and 9 which, when the machine is empty (Figure 1), form together with the side walls 7 a generally vertically oriented, wedge-shaped (as seen in side view) start chamber 11, and which expand on the formation of a bale to form a cylindrical bale chamber 11' (Figure 2). Each side wall 7 is split, with the expandable member 8 forming, in conjunction with one portion of each side wall 7, a front portion of the bale chamber and with the expandable member 9 forming, in conjunction with the other portion of each side wall 7, a rear portion of the bale chamber.

As seen in Figures 1 and 2, the rear portion of the bale chamber is larger than the front portion and in fact forms a tailgate 12 for the machine which is pivotable upwardly in order to effect discharge of a completed bale 13 (Figure 2) from the machine. With this differential sizing of the two portions of the bale chamber, the centre of gravity of a completed bale lies within the rear portion of the bale chamber, whereby there is a natural tendency for a completed bale to roll from the machine once the tailgate 12 has been raised, which tendency greatly facilitates bale discharge.

Pivotally mounted at the front of the machine is a conventional crop pick-up unit 14 which, in use, picks up crop material from the ground and delivers it to a combined crop feeder and bale support device 15 located at the mouth of the bale start chamber 11. Located within the rear portion of the bale chamber and disposed at the front bottom corner of the tailgate 12 and adjacent the feeder and support device 15 is a rotor 16 which extends across the full width of the bale chamber, i.e. extends between the side walls 7. The rotor 16 also serves to support a bale during its formation.

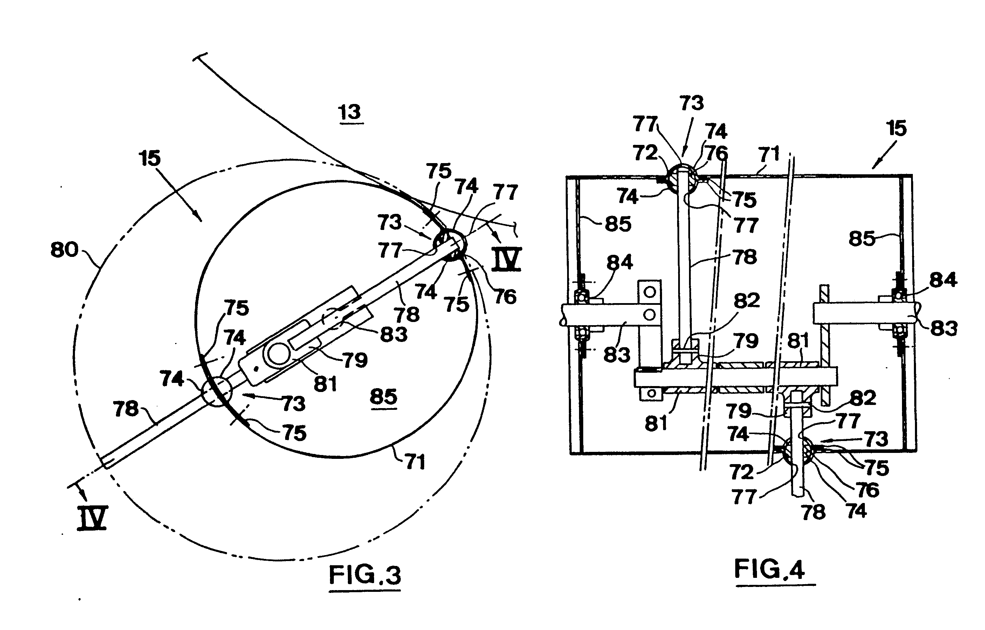

Having described the overall machine in general, certain components will now be described in greater detail with reference to Figures 3 to 6, in addition to Figures 1 and 2, of the drawings. Looking first at the expandable member 8 partially defining the front portion of the chamber, this member 8 comprises two transversely spaced apart endless chains 17 each extending around a driven sprocket 18, an idler sprocket 19 and a non-toothed guide roller 21 disposed at respective apices of a triangle, as seen in side view in Figure 1. The chains 17 are disposed towards, but inset from respective opposite sides of the machine and are interconnected by a plurality of slats (not shown) which extend transversely of the machine, with each end of each slat extending past the associated chain and terminating just short of the side walls 7. The slats of the expandable member 8 may be similar or identical to the slats 22 of the rear expandable member 9 still to be described hereinafter.

The sprocket 19 and guide roller 21 associated with each chain 17 are mounted for rotation on an arm 23 which in turn is pivotally mounted on the frame via a pivot shaft 24 (common to both arms 23) offset from the centre of the arm. The pivot shaft 24 has, at each end, a first portion around which is disposed a torsion spring 28, and a second portion which is received in bearing means mounted on the associated side wall 7. Each spring 28 serves to bias the associated arm 23 in a clockwise direction as seen in Figure 1 and 2, whereby tension in the chain 17 is maintained and any slack resulting from wear is automatically taken up. This tensioning of each chain 17 is achieved by locating one end of each spring 28 against a stop 31 fixed to the related arm 23, and locating the other end against a stop 33 fixed to the associated side wall 7.

It will be noted that, as a bale is being formed in the bale chamber, the arms 23 pivot anticlockwise, as seen in Figures 1 and 2, until the guide rollers 21 engage the opposed runs of the endless chains 17 forming part of the expandable member 8. At this moment, further pivoting of the arms 23 in the anticlockwise direction, and hence further "expansion" of the expandable member 8, becomes impossible, whereby the inner run of the expandable member 8 assumes a virtually fixed position which is very much the same as the fixed position assumed by the bale forming members in a so-called soft core baler or a baler with a fixed bale chamber.

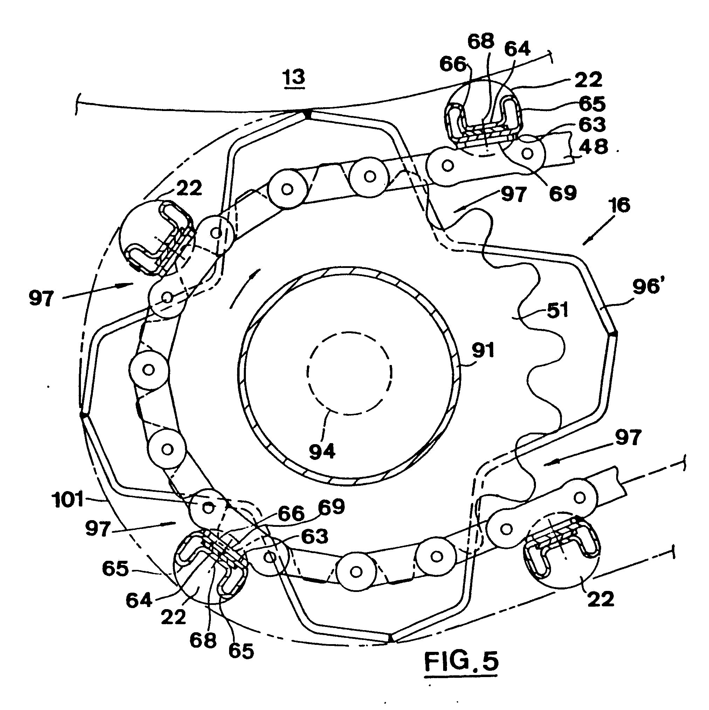

Turning now to the expandable member 9, this also comprises a pair of spaced endless chains 48 located adjacent, but inset from, the respective side walls 7 and interconnected by a plurality of slats 22 (Figure 5). Again, the slats 22 extend beyond the chains 48 and terminate just short of the side walls 7. Each chain 48 extends around an upper fixed sprocket 49, a lower fixed sprocket 51 associated with the rotor 16, and one or both movable guide rollers 52 of each of an upper and lower pair thereof. When the machine is empty (Figure 1), only one roller 52 of each pair is in engagement with the associated chain 48, but when a bale nears completion, both rollers of each pair are in engagement with said associated chain 48. Also, under this condition i.e. when a bale nears completion in the bale chamber 11', both the inner and outer runs (as seen with respect to the bale chamber) of the chains 48 engage the associated rollers 52. The rollers 52 of each pair are rotatably mounted on respective ends of a crosspiece 53 of a generally T-shaped support, the stem 54 of which is provided with a pivot 55 intermediate its ends. Each pivot 55 extends from the stem 54 through an arcuate slot 56 in the associated side wall 7 and is attached to a support arm 57 pivotally mounted at 58 on said side wall 7 at the centre of curvature of the slot 56. The end of each stem 54 of the T-shaped support remote from the crosspiece 53 is connected to one end of a tension spring 59, the other end of which is attached to the associated side wall 7. The two upper crosspieces 53 and the two lower crosspieces 53 are interconnected by respective transverse tubular beams 61 to ensure that the two upper and two lower supports pivot in unison. The springs 59 serve in the empty condition of the baler, to bias the upper T-shaped supports in a clockwise direction, and the lower supports in an anticlockwise direction, as viewed in Figure 1, whereby one roller 52 of each pair engages the associated chain 48 to maintain tension therein and again take up any slack in that chain resulting from wear. Also, the support arms 57 are pivoted in a direction towards the bale start chamber 11 until the pivot pins 55 engage the forward ends of the arcuate slots 56, under the action of the springs 59. It will also be noted that in this empty condition the rear expandable member 9 assumes a generally rectangular configuration with the run 70 facing the bale start chamber 11 being oriented generally vertically.

As a bale is being formed in the bale chamber 11', the forward run 70 is moved in a rearward direction against the force of the springs 59 and inbetween the top and bottom sprockets 49 and 51, respectively. As the bale nears completion, both guide rollers 52 of each pair of guide rollers first engage the rear runs of the respective chains 48 and ultimately, the forward runs 70 of the chains 48 engage the "opposite sides" of the guide rollers 52. Any "stretching" of the chains 48 resulting from wear is compensated by the T-shaped supports 53, 54 with the guide rollers 52 thereon moving generally radially outwardly, as seen with respect to the completed bale 13 in the bale chamber 11'. Such radially outward movement is made possible by the provision of the support arms 57 carrying the T-shaped supports being mounted for pivotal movement about the pivots 58, whereby the pivot pins 55 extending through the elongate slots 56 are moved away from the inner ends thereof.

It will be appreciated that, like the forward expandable member 8, the rear expandable member 9 also cannot expand any further once both runs of the chains 48 engage the "opposite sides" of the guide rollers 52. Thus, again in this condition, the expandable member 9 also acts as the fixed bale forming means of a so-called soft core round baler.

It will also be appreciated that, as a result of the guide rollers 21, 52 engaging at times the opposed runs of the respective associated chains 17, 48, these guide rollers 21, 52 need to have smooth outer surfaces, as toothed outer surfaces (such as those of sprockets) would interfere with the proper simultaneous guidance of both runs of the chains.

Turning now to the combined crop feeder and bale support device 15, and referring to Figures 3 and 4, this comprises a hollow rotor 71 having a smooth outer surface and provided with two diametrically opposed rows of apertures 72 each of which receives an insert 73 from within the rotor, the inserts being bolted to the rotor. Each insert 73 comprises two hemispherical shells 74 formed with flanges 75 by which the insert is bolted to the rotor 72, the sphere formed by the two shells containing a bush 76 of elastomeric synthetic plastics material. Each shell 74 is apertured to provide a through aperture 77 for a rod or finger 78 mounted in a radial extension 79 of a bush 81 of an elastomeric synthetic plastics material. Each rod 78 is retained in the extension 79 by a pin 82, and each bush 81 is rotatably mounted on a stationary crankshaft 83 the ends of which are received in bearings 84 provided in end plates 85 of the rotor 71. The rotor body is driven and rotates around the crankshaft 83, whereby the rods 78 are alternately extended (at the side of the rotor adjacent the pick-up unit 14) and retracted (at the side of the rotor adjacent the other rotor 16) by way of sliding in and out of the apertures 77 and bushes 76, the ends of the rods describing the circle indicated at 80.

The combined crop feeder and bale support device 15, together with the facing runs 60, 70 of the expandable member 8, 9 when in the empty condition of the baler define the generally triangular and upright bale starting chamber 11 with the device 15 being provided at a distance beneath the lower end of the member 8, thus providing therebetween a bale chamber inlet opening. The device 15 is further mounted proximate, and forwardly of the rotor 16 so that, in the empty condition of the baler, the generally vertical run 70 of the rear bale forming member 9 is offset to the rear of the device 15, which in part forms the base of the triangular bale starting chamber 11.

The device 15 is further also positioned relative to the lower sprockets 18 of the front bale forming member 8 and the rotor 16 (which is part of the rear bale forming member 9) so that, as a bale is nearing completion within the bale chamber, the bale is supported at least in part by the cylindrical body 71 of the device 15. Hence the cylindrical body 71 is positioned, together with other components on a circumference defining the cylindrical bale chamber 11′ when at its maximum diameter.

However, the device 15 is also positioned relative to the bale chamber 11′ so that, as a bale is being formed in the bale chamber and is nearing completion, its centre of gravity is moved from generally above the device 15 to the side thereof opposite to the side facing the pick-up device 14.

The retractable fingers 78 are substantially in the retracted position at the point on the cylindrical body 71 of the device 15 where, when a bale is being completed in the bale chamber 11′, the bale is supported on the cylindrical body, thereby avoiding the fingers penetrating into the bale and adversely affecting the surface thereof. The fingers 78 are extended to the maximum at the side of the cylindrical body 71, facing the discharge end of the pick-up device 14 in order to take over crop material therefrom and are retracted gradually from the maximum extension position to said point of contact of the bale on the cylindrical body 71, as the device is rotated.

Referring to Figure 5, the rotor 16 will now be described. The function of the rotor 16 is to provide a positive support for a bale during formation, which support does not impart any substantial vibration to the bale which might impair the formation thereof and/or cause unacceptable wear and/or damage to the machine. As already described, the chains 48 extend around sprockets 51 associated with the rotor 16 and if the rotor were not provided, the slats 22 would continuously pass beneath the bale being formed, thereby raising the bale on each occasion and thus subjecting the bale to vibration in the generally vertical plane. The rotor 16 overcomes this problem by providing pockets for the slats 22 to enter as they pass beneath the bale, whereby the rotor, together with the slats received in the pockets thereof, provide a substantially smooth or continuous surface on which the bale is supported.

The rotor 16 consists of three major portions which are transversely spaced apart and inbetween which the sprockets 51 are provided to which reference has already been made. All three of said rotor portions are substantially identical in shape when seen in end view. The outer surfaces 96′ of said rotor portions are generally star-shaped in cross-section thus providing four longitudinally extending pockets 97 for the reception of the slats 22 associated with the chains 48 and as can be seen in Figure 5. The surfaces 96′ are each formed from four identical sections of sheet metal welded together at the "points" of the star.

As the rotor 16 rotates, the slats 22 move into the pockets 97 as the chains 48 pass around the sprockets 51, whereby a substantially continuous support surface is seen by the bale 13 being formed as presented at any given instant by a slat and a "point" of the star-shaped rotor. In this respect, it will be seen from Figure 5 that, when a slat 22 is received in a pocket 97, the radially outer portion of the main body of the slat is located at the circle 101 circumscribed by the "points" of the rotor 16.

From the drawings, and more especially from Figure 2, it will be appreciated that only part of the weight of a bale being formed in the bale chamber is supported on the rotor 16 (and on a slat 22 received in a pocket 97 thereof and on the chains 48), another part of the bale weight being supported, as already mentioned, by the combined feeder and bale supporting device 15.

It should be noted that the number of teeth on each sprocket 51 is N times the number of links in the chains 48 between adjacent slats 22, where N is an integer, although preferably not one. Also, the number of teeth on each sprocket 51 is a multiple of the number of pockets provided in the rotor. It will be seen from Figure 5 that in the embodiment illustrated therein, each sprocket has sixteen teeth which is a multiple of the four pockets 97 and which makes N = 4 since a slat 22 is attached to every fourth link of the chains 48.

The drives for the various driven components of the baler are shown in Figure 2 of the drawings, these being omitted from Figure 1 for clarity. A sprocket 102 on the output shaft 103 of the gearbox 6 drives, via a chain 100, one sprocket of a triple sprocket 104 on a shaft 105 on which the sprocket 18 of the front expandable member 8 is mounted, whereby the chains 17 are driven in a clockwise direction as seen in Figures 1 and 2. Both chains 17 are driven since the shaft 105 is common to both sprockets 18. A further chain 106 extends around a second sprocket of the triple sprocket 104 and around a sprocket 107 on a common shaft 108 for the two sprockets 49 of the rear expandable member 9, whereby the two chains 48 are also driven in a clockwise direction as seen in Figures 1 and 2. Thus the runs 60 and 70 of the chains 17 and 48 partially defining the start chamber 11 move in opposite directions so as to impart a rolling motion to the crop material fed to the start chamber.

A chain 109 extends around the third sprocket of the triple sprocket 104 and around a sprocket 111 provided on one end of the cylindrical body 71 of the rotor 15, whereby the latter is driven in a clockwise direction as seen in Figures 1 and 2. A pulley 112 is also coupled to the sprocket 111 and a belt 113 extends from that pulley to a pulley 114 on the pick-up unit 14 so as to drive the latter also in a clockwise direction as seen in Figures 1 and 2. Thus it is seen that the drives to the driven components are effected in a simple manner.

In operation of the embodiment of Figure 1 to 5, the machine is hitched to the tractor or other towing vehicle via the drawbar 3, and the driveshaft 4 connected to the tractor PTO, whereby the chains 17, 48, the rotor 15 and the pick-up 14 are driven as described above. Thus as the machine is towed across a field of previously cut crop material, the latter is picked up by the pick-up 14 and conveyed overtop and rearwardly towards the rotor 15. The extended fingers or rods 78 of the latter take over the crop material and feed it into the mouth of the start chamber 11 against the rising run 70 of the chains 48 and associated slats 22, the fingers 78 then retracting and thus releasing the crop material. It will be appreciated from the foregoing description that the slats 22 are relatively closely spaced, and they serve to carry the crop material a certain way into the start chamber 11 before the crop tumbles under gravity and falls downwardly, assisted by the generally downwardly moving slats 22 of the front expandable member 8. The relatively gentle tumbling action of the crop material results in a generally soft core for the bale being formed. However, the rolling action imparted to the crop material by the rotor 15, and the slats 22 on the facing runs of the chains 17 and 48 results in a smaller core than would otherwise pertain in a conventional soft core baler. Experience has shown that the core usually starts to roll at a distance above the combined feeder and support device 15 and inbetween the facing runs 60, 70 of the bale forming members 8, 9. As the size of the bale core increases, the start chamber 11 becomes full, whereupon the core presses increasingly harder on the slats 22 of the facing runs of the chains 17 and 48 with the result that said runs of the chains 17 are urged to the left as seen in Figure 1, and said runs of the chains 48 are urged to the right, the former against the action of the springs 28 and the latter against the action of the springs 59. Accordingly, the layers of crop material surrounding the soft core begin to be more consolidated, the density of the bale in fact increasing to the outer shell thereof since the springs 28 and 59 progressively increase the tension in the chains 17 and 48.

It will be appreciated that the degree of compaction depends on the forces exerted by the springs 28 and 59. With the illustrated arrangement it is easy and convenient to vary these spring forces and thus vary the density of the bale. Therefore, if it is desired to produce soft core bales pretty much as are conventionally produced with conventional soft core balers, it is sufficient to adjust the springs 28 and 59 accordingly.

It should be noted that as the runs 60, 70 of the bale forming members 8, 9 are deflected as the bale increases in size, the facing runs of the chains 17 and 48, together with the associated slats 22, form complementary portions of a cylinder as seen in Figure 2 to give rise to the cylindrical bale chamber 11'. As already mentioned, this deflection is accompanied by pivotal movement of the arms 23 and the T-shaped supports 53, 54 to the positions indicated in Figure 2. It should also be noted that the arms 23 are pivoted off centre in order to minimize the relative movements between the sprockets 19 and the sprockets 49 so as not to create any sizeable gap therebetween through which crop material may be lost.

When the arms 23 and supports 53, 54 are in the positions of Figure 2, the chains 17 are in contact with opposite "sides", as it were, of the sprockets 18 and 19 and the rollers 21, whereby the chains are positively supported in fixed positions with no slack therein. Likewise the chains 48 are positively supported in fixed positions by the sprockets 49, 51 and the rollers 52. Thus when the bale size of Figure 2 is reached the slats 22 are moved along a fixed path around the bale being completed. As further crop material is still being fed into the bale chamber 11' and as the bale chamber cannot expand further a hard shell or outer layer is formed on the bale with compaction taking place in an inward direction from the outside. The hardness of this outer shell, and hence its weathering characteristics, depend on the amount of crop material fed into the bale chamber after the bale has reached its maximum diameter. This is comparable to the hard shell which can be produced with conventional soft core balers and is totally independent of the initial setting of the springs 28, 59.

As the bale is nearing completion in the bale chamber 11', it is supported in part on the cylindrical body 71 of the device 15 and on the rotor 16, together with the slats 22 of the rear bale forming member 9 as they pass in the successive pockets 97 of the rotor. This occurs without any undue vibration of the bale in the bale chamber and hence also of the baler. It will also be appreciated, mainly from Figure 2, that the forward bale forming member 8, together with the sprockets 18, and the rearward bale forming member 9, together with the lower pairs of guide rollers 52 on the T-shaped support members 53, 54, assist in supporting the weight of the bale in the bale chamber.

When the bale 13 has been completed, the tailgate 12 is raised (by means not shown) above the axis 108 of the sprockets 49 and since the centre of gravity of the bale 13 lies within the rear portion of the bale chamber 11', there is a natural tendency for it to roll from the machine on the raising of the tailgate. This tendency is augmented by the action of the rotor 15, which continues to be driven, and thus positive discharge of a completed bale is achieved.

As soon as a completed bale 13 is discharged from the machine, the springs 28 and 59 return the arms 23 and supports 53, 54, respectively, to the positions of Figure 1, whereby the tapered start chamber 11 is re-formed ready for forming the next bale. It will be appreciated that the machine is capable of forming bales of less than the maximum diameter as bale discharge can be effected at any time by raising the tailgate 12. Whilst any bale less than the maximum size will not have the heavily compacted outer layer or shell, the latter nevertheless will be such that the bale will hold together especially when the springs 28, 59 have been set to give an increased density to the bale being formed.

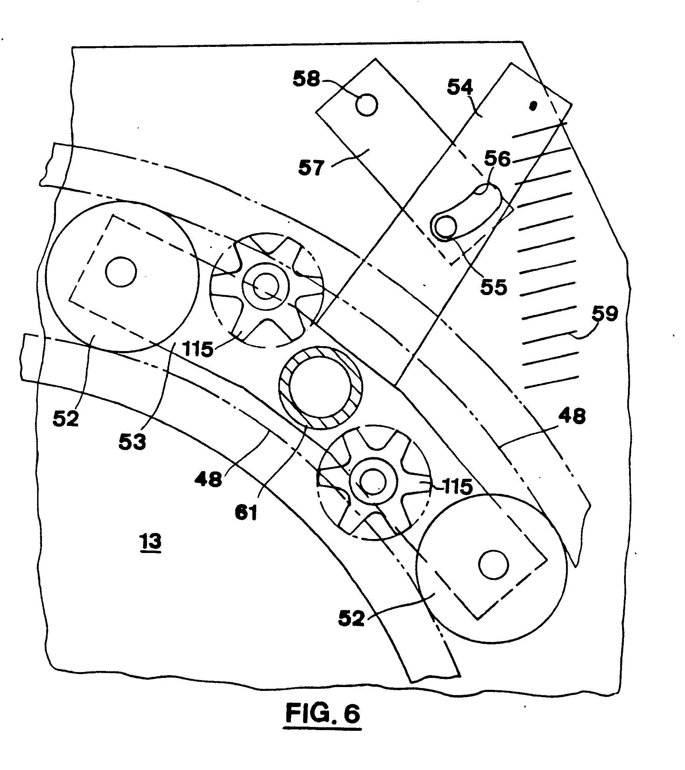

Turning now to Figure 6, this shows a modified arrangement of the guide means for guiding the chains 48 when a bale has reached its maximum diameter in the bale chamber 11'. Figure 6 shows one T-shaped support 53, 54 in the position adopted when a completed bale has been formed. In this arrangement, each support 53, 54 is provided with two sprockets 115, one in engagement with the front run of the associated chain at a location proximate to one guide roller 52 and the other in engagement with the rear run, again at a location proximate to the other guide roller 52. As before, the chains 48 engage both "sides" of the rollers 52 when in the position (bale complete) of Figure 6. This arrangement improves the guidance of both runs of the chains 48 on the guide rollers 52 when a bale has reached its maximum size within the bale chamber 11' by positively holding the chains 48 in alignment with the rollers 52.

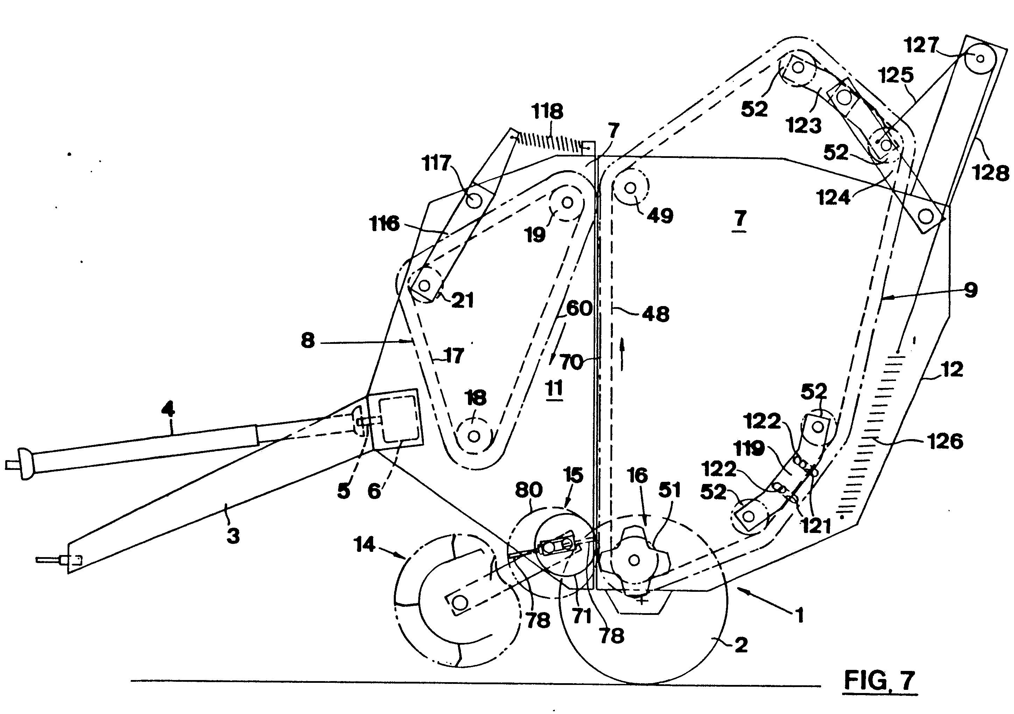

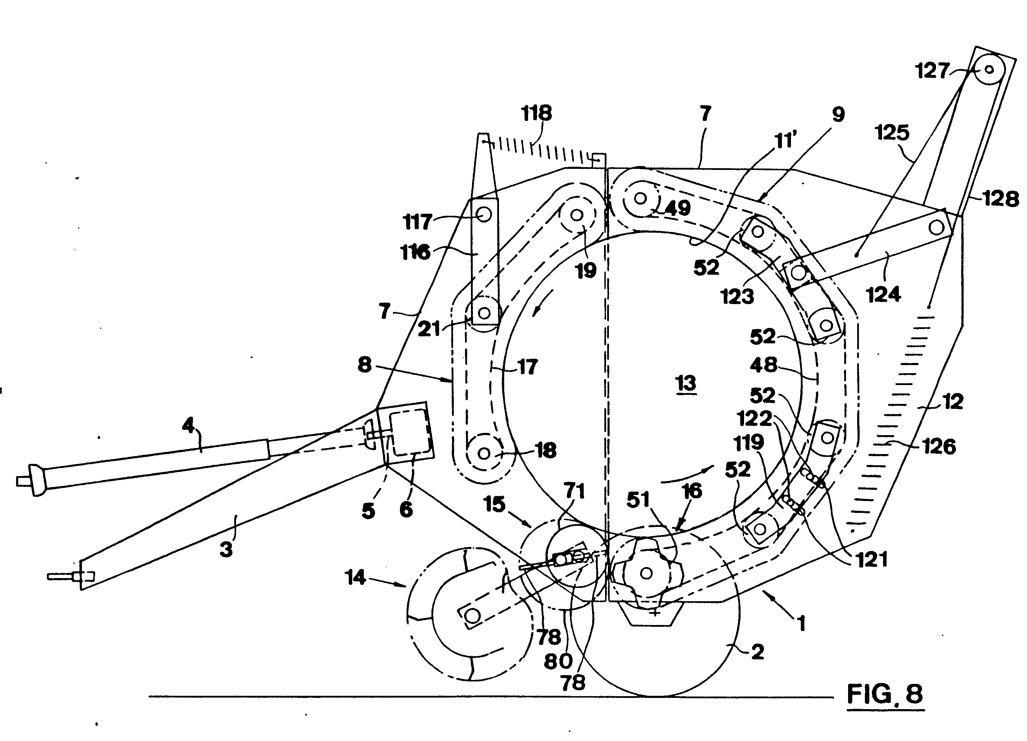

Figures 7 and 8 show an alternative embodiment of round baler which, in the main, is similar to that of Figures 1 to 5; the differences being in respect of the chain tensioning devices associated with the front and rear expandable members 8 and 9. In this embodiment the arms 23 are replaced by arms 116 which carry at one end the guide rollers 21, with the sprockets 18 and 19 being fixed. Each arm 116 is pivoted intermediate its ends on a pivot 117, with the other end of the arm connected to one end of a tension spring 118 attached at its other end to the machine frame.

With this arrangement, the gaps between the sprockets 19 of the front expandable member 8 and the sprockets 19 of the rear expandable member 9 remain constant and small so that the likelihood of any loss of crop material therethrough is small. In the embodiment of Figures 1 to 5, the sprockets 19 are movable relative to the sprockets 49 as a bale being formed increases in size so that care has to be taken with the disposition and mounting of the sprockets 19 with the crop loss problem in mind, as already explained.

As regards the rear expandable member 9, tension in the chains 48 is maintained only by the upper member and not the upper and lower members (supports 53, 54) as in the first embodiment. The lower supports 53, 54 are replaced by arms 119 which carry the guide rollers 52; said lower arms 119 being mounted for limited movement relative to the side walls 7 by virtue of a pair of elongated slots 121 formed in the side walls which slidably receive mounting pins 122 attached to the associated arms 119. This particular mounting, like the provision of the pivot arms 57 in the embodiment of Figures 1 to 5, provides compensation for any "stretching" of the chains 48 as a result of wear. The upper supports 53, 54 are replaced by arms 123 which carry the rollers 52 and are each centrally pivoted on one end of a further arm 124 which is pivoted at its other end to the machine frame. One end of a cable 125 is attached to each arm 124 intermediate its ends, the other end of the cable being secured to one end of a tension spring 126 which in turn has its other end attached to the machine frame, the cable passing over a pulley 127 on an extension 128 on the frame. Thus as the bale forming member 9 gets deflected as the bale grows (as already described with respect to the first embodiment), each arm 124 is pulled anticlockwise about its pivot and takes with it the cable 125 which therefore stretches the spring 126 associated therewith, thereby increasing the tension in the chains. Similarly, the springs 118 increase the tension in the chains 17 as the arms 116 are pivoted anticlockwise and stretch the springs 118. It will be noted that, unlike in the embodiment of Figure 1 to 5, both guide rollers 52 of each pair of guide rollers engage one run of the respective chains 48, when the baler is empty. In all other respects, the operation of the embodiment of Figures 7 and 8 is similar to that described for the embodiment of Figures 1 to 5.

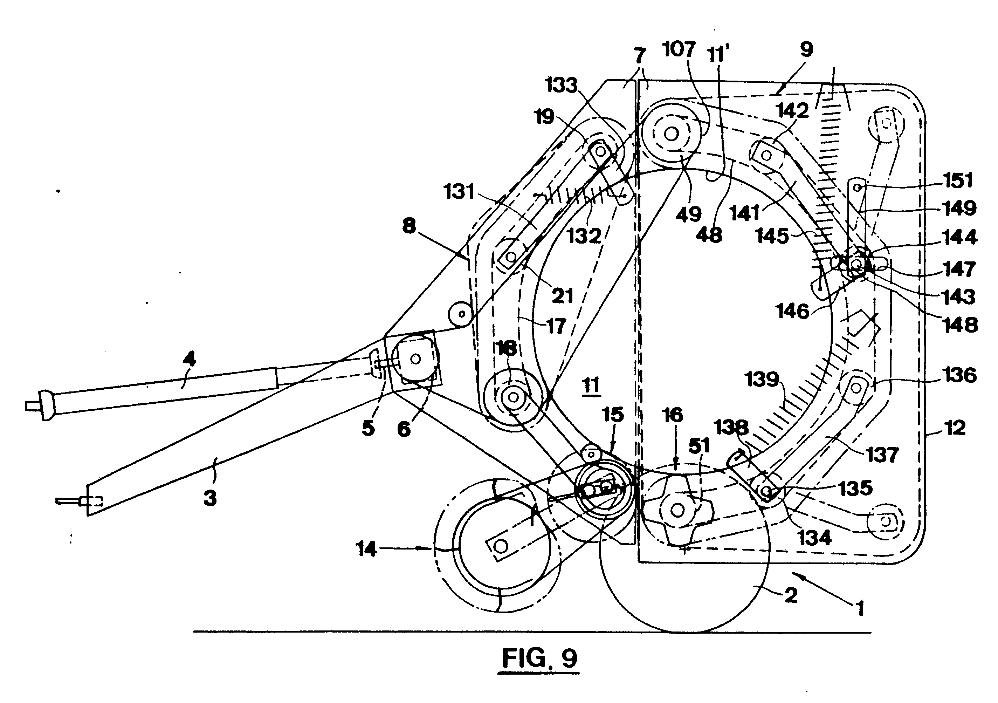

Turning now to Figure 9, this shows a still further embodiment in which again the differences with respect to the embodiment of Figures 1 to 5 are concerned with the chain tensioning devices associated with the front and rear expandable members 8 and 9, the machine otherwise being similar to the first described embodiment. The chain tensioning devices of the embodiment of Figure 9 have been simplified with respect to those described hereinbefore and associated with the front expandable member 8. The tensioning devices each comprise an arm 131 pivotally mounted at one end on the shaft of the sprocket 19 which is fixed as in the embodiment of Figures 7 and 8. The other end of the arm carries the guide roller 21 which is urged into contact with the outer run of the chain 17 by a spring 132 acting between the base frame 1 and one end of an arm 133 attached to the arm 131, these two arms in fact forming a cranked lever pivoted, as already mentioned, about the shaft of the sprocket 19.

In the embodiments of Figures 7, 8 and 9 the fixing of the sprockets 19 is an important feature in that these sprockets can be set with respect to the adjacent respective sprockets 49 of the rear expandable means 9 such that there is little or no gap therebetween through which crop material can be carried by the relatively aggressive rear expandable means 9.

As regards the chain tensioning devices associated with the rear expandable member, each comprises an upper and lower device as before with the principal difference being that one of the two rollers of the upper and lower devices is essentially fixed. Looking first at the lower devices, each comprises a fixed roller 134 mounted on a common shaft 135 extending the full width of the machine, and a movable roller 136 rotatably mounted on one end of an arm 137 which is pivotally mounted at its other end on the shaft 135. Each arm 137 is slightly cranked and has attached to it a further arm 138 (these two arms forming an overall cranked lever), the arm 138 being urged clockwise as seen in Figure 9 by a spring 139 acting between this arm and the base frame of the machine. In the empty condition of the machine, the springs 139 urge the arms 137 and the rollers 136 to the broken line position of Figure 9, these components progressively moving to the full line position as a bale is formed.

Each upper chain tensioning device is similar to the lower devices in that slightly cranked arms 141 carry movable rollers 142 at one end and are pivotally mounted at the other end on a common shaft 143 on which are rotatably mounted other rollers 144. The arms 141 are urged in a clockwise direction (as seen in Figure 9) by springs 145 acting between further arms 146 and the base frame 1, the respective two arms 141 and 146 being connected to one another and again forming overall crank levers. However, the rollers 144 are not rigidly mounted unlike the rollers 134 because expansion of the chains 48 has to be accommodated; this expansion occurring due to wearing of the links which results in chain stretch. The common shaft 143 on which the rollers 144 of the two upper chain tensioning devices are mounted, extends through slots 147 in the sidewalls 7 of the machine and is supported at each end in a bearing block 148 which is carried on one end of a support link 149 which is pivotally attached at 151 to the exterior of the related sidewalls, the slots merely allowing arcuate movement of said shaft about the pivots 151 when such movement occurs due to chain stretch and under the action of the springs 145.

The provision of substantially fixed rollers 144 in the upper devices and the fixed rollers 134 in the lower devices is advantageous in that they are permanently located at the periphery of a bale of maximum diameter, whereby they assist more positively in the compaction of the outer bale layer to form the desired hard shell. Furthermore, the fixed rollers 134 also serve to support a bale during formation, in conjunction with the rotor 16. With the previously described embodiments in which only the rotor 16 provided bale support, there is a tendency for a bale to tilt or roll rearwardly since its centre of gravity is rearward of the rotor 16. With the provision of the fixed rollers 134 (which are reasonably closely spaced with respect to the rotor 16, but not too closely spaced), this tendency for a bale to become offset from the centre of the bale chamber is obviated.

It will also be seen that the springs 145 of the upper chain tensioning devices provide a component of force rearwardly of the machine which ensures the taking up of chain stretch.

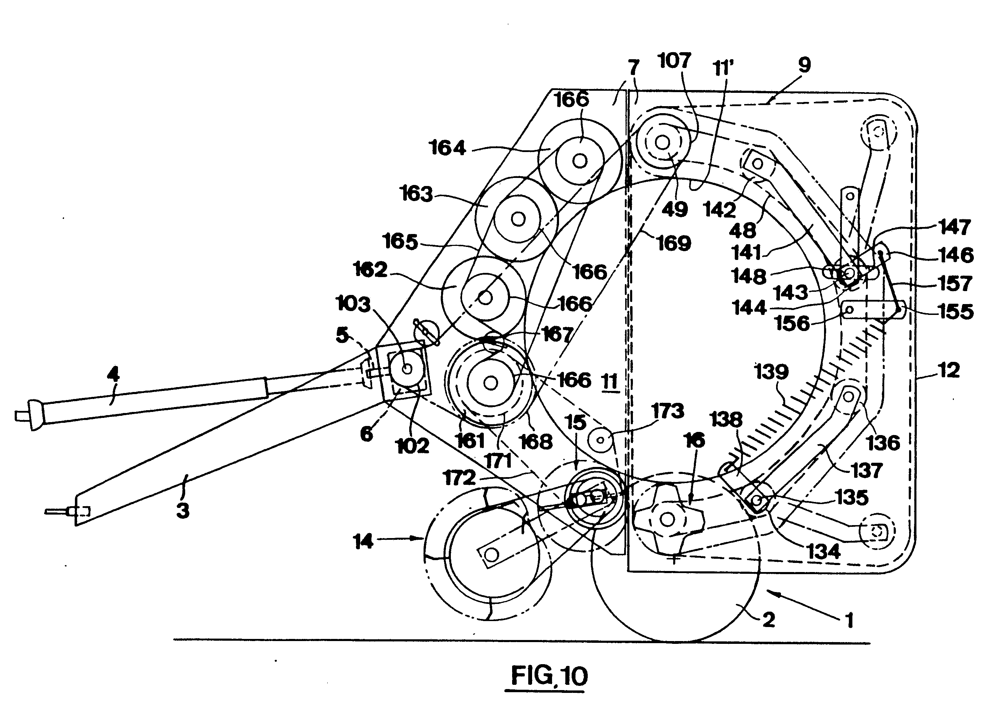

Turning now to the still further embodiment of Figure 10, the basic machine is again similar to that of the previous embodiments but in this case the front expandable means 8 have been replaced by a fixed roller arrangement, and the chain tensioning devices of the rear expandable means 9, whilst being similar to those of the embodiment Figure 9, have been further simplified. Looking at the chain tensioning devices first, the lower devices are identical to those of Figure 9 except that the springs 139 act between the respective arms 138 and the ends of links 155 pivotally mounted at the other ends on the base frame 1 at 156.

The upper devices are also identical to those of the embodiment of Figure 9 as far as the arms 141, shaft 143 and rollers 142 and 144 are concerned. However, the further arms 146 have been turned through 180 degrees and instead of being attached to the springs 145 they are connected by respective pull rods 157 to the links 155, whereby the springs 139 are common to both the upper and lower tensioning devices. The pull rods 157 serve to ensure that a component of the spring forces acting on the rollers 142 is directed generally rearwardly of the machine so that the rollers 144 and shaft 143 are always urged in the correct direction to take up any chain slack due to wear.

The arrangement of the springs 139, arms 138, 146 and links 155 is such that a greater force is exerted on the rollers 142 of the upper devices than on the rollers 136 of the lower devices because the upper rollers have to support part of the weight of the chains unlike the lower rollers, and also such that the upper and lower devices move progressively and in unison to the completed bale position in order to avoid irregularity in the bale shape during formation. These requirements are also met in the other embodiments.

As regards the front bale forming means this is, as already mentioned, in the form of a fixed roller arrangement, more specifically in the form of a set of four rollers 161, 162, 163 and 164 each of which is driven although the centre rollers 162 and 163 could be freely rotatable if desired. The rollers 161, 162, 163 and 164 are disposed such that they are disposed around part of the periphery of a maximum sized bale. Thus when such a bale has been formed, the addition of a little further crop material causes the bale to press on the rollers which thus compact the outer layer of crop material to help produce the hard outer shell.

The rollers 161 to 164 extend across the width of the machine and are mounted in bearings supported on the base frame 1. Each roller 161 to 164 has a smooth exterior surface and is driven in a clockwise direction (as seen in Figure 10) by a chain 165 which engages sprockets 166 on the rollers and also passes around an idler sprocket 167. The lower roller 161 has a further sprocket 168 engaged by a chain 169 which also engages the sprocket 107 of the rear bale forming means and the sprocket 102 on the output shaft 103 of the gearbox 6, and has a still further sprocket 171 engaged by a chain 172 which drives the combined crop feeder and bale support device 15 via an idler 173. The device 15 drives the pick-up 14 as before via a belt a pulley arrangement.

The fixed roller arrangement for the front bale forming means affords two advantages over the expandable front bale forming means 8 of the previously described embodiments: firstly, the rollers form solid, immovable bale forming means which give a good, smooth finish to the outer shell of the bale, and secondly, the use of a plain lower roller 161 reduces, if not eliminates, the possibility of crop material being carried therearound and thus taken out of the inlet throat and lost. The pressure exerted on the front bale forming means 8 by a completed bale is relatively large compared with that exerted on the rear bale forming means 9 due to their differing surface areas and unless the shafts of the former are made sufficiently robust, there is a tendency for them to suffer damage. Furthermore, the slats 22 of the embodiments of Figures 1 to 8 act relatively aggressively on the crop material, whereby there is a tendency for the slats of the front bale formings means 8 to pull crop material from the outer surface of the bale and carry it out of the crop inlet throat of the machine whereby that material may be lost. Also the pulling of crop material from the bale gives the latter a "hairy" appearance which is undesirable. Another tendency of the slats 22 is to dig into the periphery of the bale and thus produce slight corrugations around the bale periphery. When a completed bale is discharged from the machine, these corrugations disappear because the bale expands but this produces "pockets" of less compacted or "fluffy" material which is also undesirable.

It is a general requirement that the front bale forming means are not more aggressive than the rear bale forming means and preferably are less aggressive. The use of smooth, plain rollers 161—164 meets this requirement but it may be desirable to make all but the lower roller 161 more aggressive by making the rollers other than plain such as by fitting ribs thereon or by other means. Also, the rollers 164, 163, 162 and 161 can be made progressively less aggressive.

It will be seen that the present invention provides a round baler which can produce bales with a hard outer shell whilst the density of the crop material within the outer shell can be varied greatly at will from a low density comparable to the characteristics of bales produced with conventional soft core balers to a high density as is known from balers having an expandable bale chamber, thus providing greater flexibility to the operator and combining advantages of conventional soft and hard core balers.

As already mentioned, the rotor 15 has a dual function in feeding crop material to the bale chamber from the pick-up unit 14, and in helping to support the bale as it is being completed. The rotor 15 thus performs an important part in the formation of a bale and without its presence, the pick-up unit 14 would have to be mounted much closer to the mouth of the bale chamber to an extent that it would inevitably have to support each bale being formed, and conventional pick-up units are not constructed to fulfil this purpose.

The function of the rotor 16 is also important in lending further support to each bale as it is formed and in so doing to present, in conjunction with the slats 22 a substantially smooth surface to the bale. To this end the pockets 97 are formed in the surface of the rotor 16 to accommodate the slats 22 as they pass therearound. As already explained, this prevents the slats from imparting generally vertical vibrations to the bale being formed which would impair the formation thereof.

Although the illustrated embodiments employ two expandable bale-forming members 8 and 9, the member defining the smaller portion of the bale chamber 11' (be it the front or rear member) may be replaced by one or more of a fixed type of bale-forming means employing, for example, fixedly positioned rollers, or fixedly positioned chain or belt conveyors. Alternatively, the bale-forming members 8 and 9 may be augmented by one or more fixedly positioned bale-forming means. Also the chain type bale forming means 8, 9 may be replaced by belt type bale forming members.

The present invention provides a round baler capable of producing a bale with a hard outer shell (soft core bale characteristics), and with either a relatively high density (hard core bale characteristic), or a rather low density of crop material within the outer shell, without giving rise to an over complicated structure. The machine can produce a maximum sized bale (1.2 metres in diameter) in approximately two minutes, provided crop material is fed to the bale chamber at the appropriate rate. Of this bale-forming time, between 1/3 and 1/4 is devoted to forming the hard shell, i.e. this is the period in which the runs of the chain 17 and 48 are positively supported by the "opposed sides" of all the sprockets and guide rollers provided within the envelopes formed by the respective chains. This is a very important aspect because it provides the possibility of producing with a baler of the type having an expanding bale chamber, bales with an extra hard outer shell, such as is obtained with known balers of the type having a fixed chamber and commonly referred to as soft core balers. It will be appreciated that the tension initially set in the chains 17 and 48 not only determines the hardness of the core but also influences the overall density of the bale except for the hardness of the outer shell which basically is determined by the amount of crop material fed into the bale chamber after the latter has expanded to its maximum diameter. In general, a baler in accordance with the present invention provides a core which is smaller than that provided by known soft core machines due to the positive rolling action imparted to the core by the bale-forming members. Thus the baler produces a highly satisfactory bale having qualities of both soft core and hard core bales without, as already mentioned, being of complicated mechanical construction.

Aspects of the round baler described herein are claimed in the co-pending patent applications EP-A-120.544; EP-A-120.546 and EP-A-121.279.

**Claims**

1. A round baler for forming cylindrical bales of crop material comprising:

a fixed, main frame portion;

a rear, tailgate portion (12) pivotally mounted on the main frame portion;

first, driven bale-forming means (9) supported on the tailgate portion (12) and complementary, driven bale-forming means (8) supported on the main frame portion; said first bale-forming means (9) being separate from the complementary bale-forming means (8) and comprising endless flexible conveyor means having an expandable operative run (70) extending between upper and lower guide means (49, 51) and facing said complementary bale-forming means (8) in front thereof to delimit together therewith an expandable bale chamber (11, 11'); said operative run (70), when the bale chamber (11) is empty, extending along a straight, generally upright line between said upper and lower guide means (49, 51) to delimit together with the complementary bale-forming means (8) a generally elongated and generally upright bale starting chamber (11) having its centre positioned forwardly of said straight line, and, during bale formation, being expandable in a direction away from said complementary bale-forming means (8) and outwardly between said guide means (49, 51) to extend along a curved line therebetween to delimit, in part, a generally cylindrically shaped full size bale chamber (11') when a bale being formed therein (11') reaches its maximum size, and said upper and lower guide means (49, 51) being disposed at fixed positions generally at the upper, respectively the lower end of the full size bale chamber (11'), and

separate take-up and tensioning means (52—59) operatively associated with the endless flexible conveyor means of the first bale-forming means (9) for resiliently urging the operative run (70) thereof towards its straight line position when the bale chamber (11) is empty and permitting said operative run (70) to expand, opposite to resilient forces, towards its curved line position when a bale is being formed in the bale chamber (11'), and characterized in that

when the bale chamber (11') has reached its full size, the operative run (70) of the first bale-forming means (9) defines, in its entirety, a portion of the circumference of the full size bale chamber (11') which is substantially larger than the portion of the circumference of said full size bale chamber (11') defined by the complementary bale-forming means (8); the arrangement being such that, during bale formation, the centre of the bale chamber (11, 11') shifts from a position in front of said straight line to a position to the rear thereof.

2. A round baler according to claim 1 characterized in that the centre of the full size bale chamber (11') is positioned within the tailgate portion (12).

3. A round baler according to claim 1 or 2 characterized in that the bale starting chamber (11) is generally wedge-shaped.

4. A round baler according to claim 3 characterized in that the bale starting chamber (11) is generally triangular in shape.

5. A round baler according to any of the preceding claims characterized in that it further also comprises support rotor means (16) extending coaxially with said lower guide means (51); said support rotor means (16) and said lower guide means (51) being positioned generally vertically below the centre of the full size bale chamber (11').

6. A round baler according to any of the preceding claims characterized in that, in the empty condition of the baler, the operative run (70) of the first bale-forming means (9) extends generally vertically.

7. A round baler according to claim 5 characterized in that a further rotary support member (15) is provided forwardly of and adjacent to the lower guide means (51) and the support rotor means (16); said further rotary support member (15) defining together with the complementary bale-forming means (8) an inlet opening to the bale chamber (11, 11') therebetween and delimiting together with the operative run (70) of the first bale-forming means (9), the complementary bale-forming means (8) and said inlet opening, said bale chamber (11, 11').

8. A round baler according to any of the preceding claims characterized in that the complementary bale-forming means (8) comprise non-expandable conveyor means.

9. A round baler according to claim 8, characterized in that the conveyor means of the complementary bale-forming means (8) comprise one or more fixedly positioned rotatably driven rollers (161—164).

10. A round baler according to claim 9 characterized in that the conveyor means of the complementary bale-forming means (8) comprise a plurality of rollers (161—164) arranged in an array disposed substantially arcuately about the centre of the full size bale chamber (11'); the last roller (161) of said plurality of rollers (161—164), as seen in the direction of rotation of a bale in the bale chamber (11') as it is being formed therein in use of the machine, being constructed to act less aggressively on the crop material than any one of the other rollers (162—164).

11. A round baler according to claim 10 characterized in that, of each pair of adjacent rollers (161 & 162; 162 & 163; 163 & 164), the last roller (161, 162 resp. 163), as seen in said direction, is less aggressive than the other roller (162, 163 resp. 164) of each said pair of rollers (161 & 162; 162 & 163; 163 & 164).

12. A round baler according to any of the claims 9 to 11 characterized in that the or each roller (161—164) of the conveyor means of the complementary bale-forming means (8) is located downstream of the first bale-forming means (9) when seen in the direction of rotation of a bale in the bale chamber (11, 11') as it is being formed therein in use of the machine.

13. A round baler according to claim 8 characterized in that the non-expandable conveyor means of the complementary bale-forming means (8) are of the chain or belt type.

14. A round baler according to any of the claims 1 to 7 characterized in that the complementary bale-forming means comprise endless expandable conveyor means (8).

15. A round baler according to any of the preceding claims characterized in that the first bale-forming means (9) are constructed so as to act more aggressively on the crop material than the complementary bale-forming means (8).

16. A round baler according to any of the preceding claims characterized in that the take-up and tensioning means (52—59) comprise upper and lower tensioning devices (52, 53, 54) mounted rearwardly of the upper, respectively the lower guide means (49, 51); the arrangement being such that said upper and lower guide means (49, 51) on the one hand and said upper and lower tensioning devices (52, 53, 54) on the other hand are provided generally at the corners of a rectangle.

17. A round baler according to claim 16 characterized in that all guide means (49, 51) and tensioning devices (52, 53, 54) are disposed within the envelope of the associated endless conveyor means of the first bale-forming means (9).

**Patentansprüche**

1. Rundballenpresse zur Formung zylindrischer Ballen aus Erntematerial, mit:
einem festen Hauptrahmenteil,
einem hinteren Heckklappenteil (12), das schwenkbar an dem Hauptrahmenteil befestigt ist,

ersten angetriebenen Ballenformungseinrichtungen (9), die an dem Heckklappenteil (12) befestigt sind, und zusätzlichen angetriebenen Ballenformungseinrichtungen (8), die an dem Hauptrahmenteil gehaltert sind, wobei die ersten Ballenformungseinrichtungen (9) von den zusätzlichen Ballenformungseinrichtungen (8) getrennt sind und endlose flexible Fördereinrichtungen umfassen, die einen ausdehnbaren Arbeitsstrang (70) aufweisen, der sich zwischen oberen und unteren Führungseinrichtungen (49, 51) erstreckt und auf die zusätzlichen Ballenformungseinrichtungen (8) an deren Vorderseite gerichtet ist, um zusammen mit diesen eine ausdehnbare Ballenkammer (11, 11') zu umgrenzen, wobei sich der Arbeitsstrang (70) bei leerer Ballenkammer (11) entlang einer geraden, allgemein aufwärts gerichteten Linie zwischen den oberen und unteren Führungseinrichtungen (49, 51) erstreckt, um zusammen mit den zusätzlichen Ballenformungseinrichtungen (8) eine allgemein langgestreckte und allgemein aufwärts gerichtete Ballenanfangskammer (11) zu bilden, deren Mittelpunkt vor der geraden Linie liegt, und während der Ballenformung in einer Richtung von den zusätzlichen Ballenformungseinrichtungen (8) fort und nach außen zwischen den Führungseinrichtungen (49, 51) ausdehnbar ist, um sich entlang einer gekrümmten Linie zwischen diesen zu erstrecken, sodaß teilweise eine allgemein zylindrisch geformte, der vollen Ballengröße entsprechende Kammer (11') umgrenzt wird, wenn ein darin gebildeter (11') Ballen seine maximale Größe erreicht, und wobei die oberen und unteren Führungseinrichtungen (49, 51) an festen Positionen allgemein an dem obern bzw. dem unteren Ende der der vollen Ballengröße entsprechenden Kammer (11') angeordnet sind, und

getrennten Aufnahme- und Spanneinrichtungen (52—59), die betriebsmäßig den endlosen flexiblen Fördereinrichtungen der ersten Ballenformungseinrichtungen (9) zugeordnet sind, um deren Arbeitsstrang (70) bei leerer Ballenkammer (11) elastisch in Richtung auf seine geradlinige Position zu spannen und es diesem Arbeitsstrang (70) zu ermöglichen, sich gegen die elastischen Kräfte in Richtung auf seine einer gekrümmten Linie entsprechenden Position auszudehnen, wenn ein Ballen in der Ballenkammer (11) geformt wird,

dadurch gekennzeichnet, daß wenn die Ballenkammer (11') ihre volle Größe erreicht hat, der Arbeitsstrang (70) der ersten Ballenformungseinrichtungen (9) in seiner Gesamtheit einen Teil des Umfanges des der vollen Größe entsprechenden Ballenkammer (11') bildet, der wesentlich größer als der Teil des Umfanges der der vollen Größe entsprechenden Ballenkammer (11') ist, die durch die zusätzlichen Ballenformungseinrichtungen (8) gebildet ist, wobei die Anordnung derart ist, daß sich während der Ballenformung der Mittelpunkt der Ballenkammer (11, 11') sich von einer Position vor der Vorderseite der geraden Linie auf eine Position an deren Rückseite verschiebt.

2. Rundballenpresse nach Anspruch 1, dadurch gekennzeichnet, daß der Mittelpunkt der die volle Größe aufweisenden Ballenkammer (11') innerhalb des Heckklappenteils (12) angeordnet ist.

3. Rundballenpresse nach Anspruch 1 oder 2, dadurch gekennzeichnet, daß die Ballenanfangskammer (11) allgemein keilförmig ist.

4. Rundballenpresse nach Anspruch 3, dadurch gekennzeichnet, daß die Ballenanfangskammer (11) eine allgemein dreieckige Form aufweist.

5. Rundballenpresse nach einem der vorhergehenden Ansprüche, dadurch gekennzeichnet, daß sie weiterhin Stützrotoreinrichtungen (16) umfaßt, die sich koaxial zu den unteren Führungseinrichtungen (51) erstrecken, und daß die Stützrotoreinrichtungen (16) und die unteren Führungseinrichtungen (51) allgemein vertikal unter dem Mittelpunkt der der vollen Größe entsprechenden Ballenkammer (11') angeordnet sind.

6. Rundballenpresse nach einem der vorhergehenden Ansprüche, dadurch gekennzeichnet, daß im leeren Zustand der Ballenpresse der Arbeitsstrang (70) der ersten Ballenformungseinrichtungen (9) sich allgemein vertikal erstreckt.

7. Rundballenpresse nach Anspruch 5, dadurch gekennzeichnet, daß ein weiteres rotierendes Stützteil (15) vor und benachbart zu den unteren Führungseinrichtungen (51) und den Stützrotoreinrichtungen (16) vorgesehen ist, und daß das weitere rotierende Stützteil (15) zusammen mit den zusätzlichen Ballenformungseinrichtungen (8) eine Einlaßöffnung der Ballenkammer (11, 11') zwischen diesen Teilen bildet und zusammen mit dem Arbeitsstrang (70) der ersten Ballenformungseinrichtungen (9), den zusätzlichen Ballenformungseinrichtungen (8) und der Einlaßöffnung die Ballenkammer (11, 11') umgrenzt.

8. Rundballenpresse nach einem der vorhergehenden Ansprüche, dadurch gekennzeichnet, daß die zusätzlichen Ballenformungseinrichtungen (8) eine nicht ausdehnbare Fördereinrichtung umfassen.

9. Rundballenpresse nach Anspruch 8, dadurch gekennzeichnet, daß die Fördereinrichtungen der zusätzlichen Ballenformungseinrichtungen (8) ein oder mehrere an festen Positionen angeordnete, in Drehung angetriebene Walzen (161, 164) umfassen.

10. Rundballenpresse nach Anspruch 9, dadurch gekennzeichnet, daß die Fördereinrichtungen der zusätzlichen Ballenformungseinrichtungen (8) eine Vielzahl von Walzen (161—164) umfassen, die in einer Anordnung angeordnet sind, die im wesentlichen bogenförmig um den Mittelpunkt der der vollen Größe entsprechenden Ballenkammer (11') angeordnet ist, und daß die letzte Walze (161) der Vielzahl von Walzen (161—164) bei Betrachtung in Drehrichtung eines Ballens in der Ballenkammer (11') während dessen Formung im Betrieb der Maschine so ausgebildet ist, daß sie weniger aggressiv auf das Erntematerial einwirkt, als irgendeine der anderen Walzen (162—164).

11. Rundballenpresse nach Anspruch 10, dadurch gekennzeichnet, daß von jedem Paar von benachbarten Walzen (161 & 162; 162 & 163; 163 & 164) die letzte Walze (161, 162 bzw. 163) bei Betrachtung in der genannten Drehrichtung weniger aggressiv als die andere Walze (162, 163 bzw. 164) jedes der Paare von Walzen (161 & 162; 162 & 163; 163 & 164) ist.

12. Rundballenpresse nach einem der Ansprüche 9 bis 11, dadurch gekennzeichnet, daß die oder jede Walze (161—164) der Fördereinrichtungen der zusätzlichen Ballenformungseinrichtungen (8) bei Betrachtung in Drehrichtung eines Ballens in der Ballenkammer (11, 11') während dessen Formung im Betrieb der Maschine hinter der ersten Ballenformungseinrichtung (9) angeordnet ist.

13. Rundballenpresse nach Anspruch 8, dadurch gekennzeichnet, daß die nicht ausdehnbaren Fördereinrichtungen der zusätzlichen Ballenformungseinrichtungen (8) vom Ketten- oder Riementyp sind.

14. Rundballenpresse nach einem der Ansprüche 1 bis 7, dadurch gekennzeichnet, daß die zusätzlichen Ballenformungseinrichtungen endlose ausdehnbare Fördereinrichtungen (8) umfassen.

15. Rundballenpresse nach einem der vorhergehenden Ansprüche, dadurch gekennzeichnet, daß die ersten Ballenformungseinrichtungen (9) so ausgebildet sind, daß sie aggressiver auf das Erntematerial einwirken, als die zusätzliche Ballenformungseinrichtungen (8).

16. Rundballenpresse nach einem der vorhergehenden Ansprüche, dadurch gekennzeichnet, daß die Aufnahme- und Spanneinrichtungen (52—59) obere und untere Spanneinrichtungen (52, 53, 54) umfassen, die rückwärts von den oberen bzw. unteren Führungseinrichtungen (49, 51) angeordnet sind, wobei die Anordnung derart ist, daß die oberen und unteren Führungseinrichtungen (49, 51) einerseits und die oberen und unteren Spanneinrichtungen (52, 53, 54) andererseits allgemein an den Ecken eines Rechteckes angeordnet sind.

17. Rundballenpresse nach Anspruch 16, dadurch gekennzeichnet, daß alle Führungseinrichtungen (49, 51) und Spanneinrichtungen (52, 53, 54) innerhalb der Umhüllung der zugehörigen endlosen Fördereinrichtungen der ersten Ballenformungseinrichtungen (9) angeordnet sind.

**Revendications**

1. Ramasseuse-presse à balles rondes pour former des balles cylindriques de produits de récolte, comportant
une partie formant châssis principal, fixe;
une partie formant ridelle arrière (12) montée pivotante sur la partie formant châssis principal;
des premier moyens de formage de balles entraînés (9) montés sur la partie formant ridelle arrière (12) et des moyens de formage de balles entraînés complémentaires (8) montés sur la partie formant châssis principal; lesdits premiers moyens de formage de balles (9) étant séparés des moyens de formage de balles complémentaires (8) et comportant des moyens transporteurs flexibles sans fin, pourvus d'un brin actif extensible (70) qui s'étend entre des moyens de guidage supérieur et inférieur (49, 51) en faisant face auxdits moyens de formage de balles complémentaires (8), devant ceux-ci, pour délimiter conjointement avec eux une chambre à balles extensible (11, 11'); ledit brin actif (70) s'étendant, lorsque la chambre à balles (11) est vide, le long d'une ligne droite sensiblement verticale entre lesdits moyens de guidage supérieur et inférieur (49, 51), pour délimiter conjointement avec les moyens de formage de balles complémentaires (8) une chambre de commencement de balles sensiblement allongée et, dans l'ensemble, verticale (11) dont le centre est situé en avant de ladite ligne droite, et étant, en cours de formage d'une balle, apte à s'étirer dans une direction éloignée desdits moyens de formage de balles complémentaires (8) et vers l'extérieur, entre lesdits moyens de guidage (49, 51) pour s'étendre dans l'espace qui les sépare le long d'une ligne courbe, afin de délimiter, en partie, une chambre à balles de dimensions finies présentant une forme sensiblement cylindrique (11'), lorsqu'une balle en train d'être formée dans celle-ci atteint sa taille maximale, lesdits moyens de guidage supérieur et inférieur (49, 51) étant disposés en des points fixes situés, d'une manière générale, au niveau de l'extrémité supérieure, respectivement inférieure, de la chambre à balles de dimensions finies (11'), et

des moyens enrouleurs et tendeurs (52—59) associés d'une manière fonctionnelle aux moyens transporteurs flexibles sans fin des premiers moyens de formage de balles (9), pour solliciter élastiquement le brin actif (70) de ceux-ci vers sa position en ligne droite, lorsque la chambre à balles (11) est vide, et pour permettre audit brin actif (70) de s'étirer, à l'encontre de forces élastiques, vers sa position en ligne courbe, lorsqu'une balle est en train d'être formée dans la chambre à balles (11'), et

caractérisée en ce que

lorsque la chambre à balles (11') atteint ses dimensions finies, le brin actif (70) des premiers moyens de formage de balles (9) définit, dans sa totalité, une partie de la circonférence de la chambre à balles de dimensions finies (11'), sensiblement supérieure à la partie de la circonférence de ladite chambre à balles de dimensions finies (11') définie par les moyens de formage de balles complémentaires (8); la conception étant telle qu'en cours de formage d'une balle, le centre de la chambre à balles (11, 11') se déplace d'une position située devant ladite ligne droite dans une position située vers l'arrière de celle-ci.

2. Ramasseuse-presse à balles rondes selon la revendication 1, caractérisée en ce que le centre de la chambre à balles de dimensions finies (11') est situé à l'intérieur de la partie formant ridelle arrière (12).

3. Ramasseuse-presse à balles rondes selon la revendication 1 ou 2, caractérisée en ce que la chambre de commencement de balles (11) est, dans l'ensemble, cunéiforme.

4. Ramasseuse-presse à balles rondes selon la revendication 3, caractérisée en ce que la chambre de commencement de balles (11) a, dans l'ensemble, une forme triangulaire.

5. Ramasseuse-presse à balles rondes selon l'une quelconque des revendications précédentes, caractérisée en ce qu'elle comporte également des moyens formant rotor de support (16) qui s'étendent coaxialement avec lesdits moyens de guidage inférieurs (51); lesdits moyens formant rotor de support (16) et lesdits moyens de guidage inférieurs (51) étant placés sensiblement verticalement au-dessous du centre de la chambre à balles de dimensions finies (11').

6. Ramasseuse-presse à balles rondes selon l'une quelconque des revendications précédentes, caractérisée en ce que, lorsque la ramasseuse-presse à balles est à l'état vide, le brin actif (70) des premiers moyens de formage de balles (9) s'étend sensiblement verticalement.

7. Ramasseuse-presse à balles rondes selon la revendication 5, caractérisée en ce qu'un autre organe de support rotatif (15) est prévu en avant et à proximité des moyens de guidage inférieurs (51) et des moyens formant rotor de support (16); ledit autre organe de support rotatif (15) définissant, conjointement avec les moyens de formage de balles complémentaires (8) et dans l'espace qui les sépare de ceux-ci, un orifice d'entrée dans la chambre à balles (11, 11') et, conjointement avec le brin actif (70) des premiers moyens de formage de balles (9), les moyens de formage de balles complémentaires (8) et ledit orifice d'entrée, ladite chambre à balles (11, 11').

8. Ramasseuse-presse à balles rondes selon l'une quelconque des revendications précédentes, caractérisée en ce que les moyens de formage de balles complémentaires (8) comportent des moyens transporteurs non extensibles.

9. Ramasseuse-presse à balles rondes selon la revendication 8, caractérisée en ce que les moyens transporteurs des moyens de formage de balles complémentaires (8) comportent au moins un rouleau positionné d'une manière fixe et entraîné en rotation (161—164).

10. Ramasseuse-presse à balles rondes selon la revendication 9, caractérisée en ce que les moyens transporteurs des moyens de formage de balles complémentaires (8) comportent une série de rouleaux (161—164) conçus sous la forme d'une nappe disposée sensiblement en arc autour du centre de la chambre à balles de dimensions finies (11'), le dernier rouleau (161) de ladite série de rouleaux (161—164) étant, lorsqu'on le considère dans le sens de rotation d'une balle dans la chambre à balles (11') pendant qu'elle est en train d'être formée dans celle-ci, en cours de fonctionnement de la machine, construit pour exercer sur les produits de récolte une action moins agressive que l'un quelconque des autres rouleaux (162—164).

11. Ramasseuse-presse à balles rondes selon la revendication 10, caractérisée en ce que, sur chaque paire de rouleaux adjacents (161 & 162; 162 & 163; 163 & 164), le dernier rouleau (161, 162, respectivement 163) est, lorsqu'on le considère dans ledit sens, moins agressif que l'autre rouleau (162, 163, respectivement 164) de chacune desdites paires de rouleaux (161 & 162; 162 & 163; 163 & 164).

12. Ramasseuse-presse à balles rondes selon l'une quelconque des revendications 9 à 11, caractérisée en ce que le ou les rouleaux (161—164) des moyens transporteurs des moyens de formage de balles complémentaires (8) est (sont) situés en aval des premiers moyens de formage de balles (9), lorsqu'on les considère dans le sens de rotation d'une balle dans la chambre à balles (11, 11') pendant qu'elle est en train d'être formée dans celle-ci, en cours de fonctionnement de la machine.

13. Ramasseuse-presse à balles rondes selon la revendication 8, caractérisée en ce que les moyens transporteurs non extensibles des moyens de formage de balles complémentaires (8) sont du type à chaîne ou à courroie.

14. Ramasseuse-presse à balles rondes selon l'une quelconque des revendications 1 à 7, caractérisée en ce que les moyens de formage de balles complémentaires comportent des moyens transporteurs extensibles sans fin (8).

15. Ramasseuse-presse à balles rondes selon l'une quelconque des revendications précédentes, caractérisée en ce que les premiers moyens de formage de balles (9) sont construits de façon à exercer sur les produits de récolte une action plus agressive que les moyens de formage de balles complémentaires (8).

16. Ramasseuse-presse à balles rondes selon l'une quelconque des revendications précédentes, caractérisée en ce que les moyens enrouleurs et tendeurs (52—59) comportent des dispositifs tendeurs supérieurs et inférieurs (52, 53, 54) montés en arrière des moyens de guidage supérieur, respectivement inférieur (49, 51); la conception étant telle que lesdits moyens de guidage supérieur et inférieur (49, 51), d'une part, et lesdits dispositifs tendeurs supérieurs et inférieurs (52, 53, 54), d'autre part, sont, d'une manière générale, disposés au niveau des coins d'un rectangle.

17. Ramasseuse-presse à balles rondes selon la revendication 16, caractérisée en ce que les moyens de guidage (49, 51) et les dispositifs tendeurs (52, 53, 54) sont tous disposés à l'intérieur de l'enveloppe des moyens transporteurs sans fin associés des premiers moyens de formage de balles (9).

FIG.1

FIG.2

EP 0 120 545 B1

FIG.3

FIG.4

EP 0 120 545 B1

FIG.5

FIG. 6

FIG. 7

EP 0 120 545 B1

FIG. 8

EP 0 120 545 B1

FIG. 9

EP 0 120 545 B1

FIG.10

EP 0 120 545 B1